(19) Europäisches Patentamt
European Patent Office
Office européen des brevets

(11) **EP 3 639 190 B1**

(12) **FASCICULE DE BREVET EUROPEEN**

(45) Date de publication et mention
de la délivrance du brevet:
**15.12.2021 Bulletin 2021/50**

(21) Numéro de dépôt: **18728657.0**

(22) Date de dépôt: **08.06.2018**

(51) Int Cl.:
*G06K 9/00* (2006.01)   *G06K 9/62* (2006.01)
*G06N 3/063* (2006.01)   *G06N 3/04* (2006.01)
*G06N 3/08* (2006.01)

(86) Numéro de dépôt international:
**PCT/EP2018/065241**

(87) Numéro de publication internationale:
**WO 2018/228955 (20.12.2018 Gazette 2018/51)**

(54) **PROCEDE D'APPRENTISSAGE DE DESCRIPTEURS POUR LA DETECTION ET LA LOCALISATION D'OBJETS DANS UNE VIDEO**

DESKRIPTORLERNVERFAHREN ZUR DETEKTION UND ORTUNG VON OBJEKTEN IN EINEM VIDEO

DESCRIPTOR LEARNING METHOD FOR THE DETECTION AND LOCATION OF OBJECTS IN A VIDEO

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.06.2017 FR 1755232**

(43) Date de publication de la demande:
**22.04.2020 Bulletin 2020/17**

(73) Titulaires:
• **Institut Mines Telecom**
**75014 Paris (FR)**
• **Centre National de la Recherche Scientifique**
**75016 Paris (FR)**

(72) Inventeur: **JAKUBOWICZ, Jérémie**
**92240 Malakoff (FR)**

(74) Mandataire: **Nony**
**11 rue Saint-Georges**
**75009 Paris (FR)**

(56) Documents cités:
**CN-A- 106 557 778   US-A1- 2009 141 969**

• **Jeffrey Dean ET AL: "Large scale distributed deep networks", The 26th annual conference on Neural Information Processing Systems (NIPS'25): 3-8 December 2012, 6 décembre 2012 (2012-12-06), XP055113684, Extrait de l'Internet: URL:http://books.nips.cc/papers/files/nips 25/NIPS2012_0598.pdf [extrait le 2014-04-11] cité dans la demande**
• **MU LI ET AL: "Scaling Distributed Machine Learning with the Parameter Server", PROCEEDINGS OF THE 2014 INTERNATIONAL CONFERENCE ON BIG DATA SCIENCE AND COMPUTING, BIGDATASCIENCE '14, 1 janvier 2014 (2014-01-01), pages 1-1, XP055405900, New York, New York, USA DOI: 10.1145/2640087.2644155 ISBN: 978-1-4503-2891-3**
• **WANG JIANZONG ET AL: "DistDL: A Distributed Deep Learning Service Schema with GPU Accelerating", 13 novembre 2015 (2015-11-13), ECCV 2016 CONFERENCE; [LECTURE NOTES IN COMPUTER SCIENCE; LECT.NOTES COMPUTER], SPRINGER INTERNATIONAL PUBLISHING, CHAM, PAGE(S) 793 - 804, XP047414696, ISSN: 0302-9743 ISBN: 978-3-642-33485-6 [extrait le 2015-11-13] 2. DistDL Service Schema**

(Cont. page suivante)

- **HELD DAVID ET AL: "Learning to Track at 100 FPS with Deep Regression Networks", COMPUTER VISION - ECCV 2016, vol. 9905, no. 558, 17 septembre 2016 (2016-09-17), pages 749-765, XP047355284, DOI: 10.1007/978-3-319-46448-0_45 ISBN: 978-3-319-46447-3 [extrait le 2016-09-17]**

**EP 3 639 190 B1**

**Description**

La présente invention concerne un procédé de détection et de localisation d'objets dans des vidéos numériques.

La détection et la localisation automatique d'objets dans les vidéos numériques est un domaine particulièrement actif et complexe, pour lequel aucune solution existante n'arrive à concurrencer les performances humaines lorsque le catalogue d'objets à détecter et localiser est vaste.

Le terme « *objet* » est à entendre au sens large et désigne toute entité cohérente et délimitée spatialement et temporellement dans les vidéos. Les personnes, les visages, les véhicules, les animaux, les bâtiments sont ainsi considérés, entre autres, comme des objets.

Le problème de la détection et la localisation d'objets a été investigué dans le cadre des images, conduisant à des méthodes ayant des performances proches des performances humaines pour la détection d'objets. En particulier, la détection de chiffres manuscrits par des méthodes d'apprentissage automatique montre des performances égales ou supérieures aux performances humaines, comme décrit dans l'article de D. Ciresan et al « Multi-column Deep Neural Networks for Image Classification », Computer Vision and Pattern Recognition, 2012. La détection de visages a également atteint un niveau de maturité suffisant pour être utilisé dans différents appareils d'acquisition d'images, comme montré dans l'article de Y. Taigman et al, « DeepFace: Closing the Gap to Human-Level Performance in Face Verification », Computer Vision and Pattern Recognition, 2014.

Le problème de la détection et de la localisation d'objets dans les images numériques est à la fois lié et distinct du problème analogue dans les vidéos. En effet, dans les images, le problème est rendu plus difficile par le fait qu'il manque la dimension temporelle permettant de faciliter la détection dans la mesure où le mouvement cohérent d'une entité aide à l'identifier comme telle. Par contre, il est rendu plus simple par la plus faible quantité de données à traiter.

Le choix des descripteurs constitue un enjeu majeur, car ces derniers conditionnent fortement le résultat final de la recherche ou de la classification. Les descripteurs de forme caractérisent les contours des objets et permettent de les séparer dans des classes. Une méthode pour reconnaître des objets dans les vidéos comme dans les images consiste à utiliser l'apprentissage automatique supervisé (« *supervised machine learning* » en anglais). Cette technique nécessite une base de données annotée, dite *base d'apprentissage*, dans laquelle les objets que l'on cherche à localiser sont repérés et leur classe indiquée. La construction de bases de données annotées repose sur un travail humain fastidieux. Des efforts collaboratifs ont permis de mettre en place de telles bases de données, de grande taille, pour les images, notamment décrites dans l'article de J. Deng et al, « ImageNet: A Large-Scale Hierarchical Image Database », Computer Vision and Pattern Recognition, 2009. Mais des bases de données d'envergure comparable permettant de détecter une large classe d'objets n'existent pas à l'heure actuelle pour les vidéos.

Il est connu de la demande internationale WO 2016/081880 de chercher, dans un grand volume de données vidéo, des vidéos contenant certains objets, à partir d'une requête client fournissant une relation à rechercher entre ces objets, par exemple un accident de la circulation entre un véhicule et un cycliste sur des vidéos de surveillance.

Les brevets US 8 792 732 et US 8 254 699 décrivent des méthodes d'annotation utilisant les métadonnées de contenus vidéo, notamment de vidéos YouTube, pour annoter automatiquement les bases de données vidéo afin de créer une base de descripteurs.

La plupart des techniques actuelles connues pour la reconnaissance d'objets, que ce soit pour les images ou pour les vidéos, utilisent des réseaux de neurones dits « profonds », contenant à l'heure actuelle de plus en plus de paramètres, comme l'architecture décrite dans l'article de Q. V. Le et al, « Building high-level features using large scale unsupervised learning », International Conference on Machine Learning, 2012. Par exemple, l'architecture ResNet, décrite dans l'article de K. He et al, « Deep Residual Learning for Image Recognition », Computer Vision and Pattern Recognition, 2016, utilise 152 couches cachées pour reconnaître 1000 classes d'objets.

Ce réseau de neurones profond montre de bonnes performances, toutefois non comparables aux performances humaines, pour le problème de la classification d'objets dans les images numériques, ainsi que les réseaux de neurones dérivés de l'architecture « Faster R-CNN », décrit dans l'article de S. Ren et al, « Faster R-CNN: towards real-time object detection with region proposal networks », Advances in Neural Information Processing Systems, 2015, tels que le réseau YOLO de l'article de J. Redmon et al, « You only look once: Unified, real-time object detection », Computer Vision and Pattern Recognition, 2016, ou le réseau SSD de W. Liu et al (« SSD: Single shot multibox detector », European Conference on Computer Vision, 2016).

Dans la mesure où ces architectures sont construites sur l'analyse d'une seule image, elles peuvent être utilisées pour une vidéo qui est une succession d'images, appelées « *trames* » dans la suite, chaque trame étant analysée indépendamment des autres.

La demande US 2012/0238254 décrit un procédé permettant à un utilisateur de sélectionner une zone d'une image d'une vidéo qu'il est en train de visionner sur un appareil mobile, afin d'identifier un objet se trouvant dans cette zone en utilisant une librairie d'objets, dans le but notamment de générer des offres publicitaires concernant l'objet identifié et provenant d'au moins un site marchand.

Il est connu du brevet US 7 246 314 de sélectionner interactivement une scène dans une vidéo afin de retrouver des scènes similaires dans le reste de la vidéo ou dans d'autres vidéos. Cette méthode, utilisant la segmentation et des modèles gaussiens, ne permet pas la détection précise d'objets.

Dans la majorité des vidéos d'intérêt pour les consommateurs, il y a une redondance importante entre deux trames successives d'une même vidéo. Cette redondance n'étant pas prise explicitement en compte dans ces solutions, des phénomènes d'oscillations peuvent apparaître : dans une trame, par exemple, un objet est correctement détecté, dans la suivante, à cause du bruit il ne l'est plus, puis il est à nouveau détecté quelques trames plus loin. Il est tout au plus possible de régulariser a posteriori la détection, c'est-à-dire de privilégier les détections qu'on peut mettre en correspondance avec des détections précédentes.

Le document US2009/141969 A1 divulgue un procédé d'apprentissage de descripteurs et d'annotations de vidéos utilisant des réseaux de neurones.

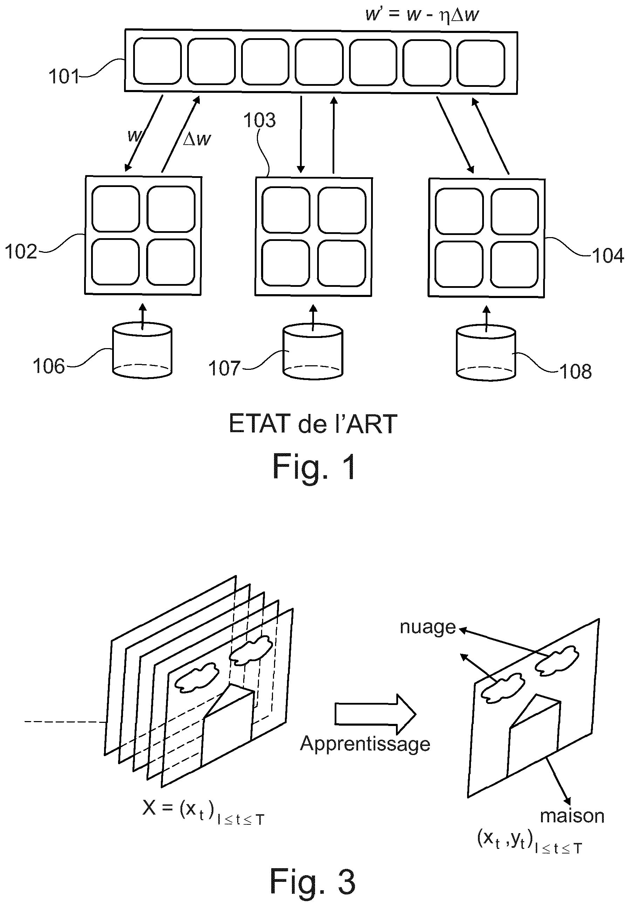

Pour entraîner les modèles associés à de telles architectures, il est nécessaire de distribuer les calculs, car la puissance de calcul requise est très élevée, et un très grand nombre d'entités de calcul peut être utilisé, par exemple jusqu'à une centaine de processeurs graphiques (« *GPU* »). L'article de Dean et al, « Large Scale Distributed Deep Networks », Advances in Neural Information Processing Systems, 2012 décrit un système, représenté à la figure 1, utilisant un serveur de paramètres 101 qui alimente différentes entités de calcul 102, 103, 104, travaillant en parallèle chacune sur un fragment de données 106, 107, 108 (« *shards* » en anglais), et mettant à jour les paramètres $w$ de façon asynchrone, les entités de calculs ne s'attendant pas les unes les autres. Plus précisément, chaque entité de calcul lit les paramètres courants $w$ à travers une requête adressée au serveur de paramètres, effectue ses calculs et renvoie les paramètres $\Delta w$ mis à jour à travers une autre requête adressée au serveur de paramètres. Les paramètres finaux $w'$ sont fonction des paramètres courants $w$, des paramètres $\Delta w$ mis à jour sur chaque entité, et de $\eta$ le taux d'apprentissage du modèle, dans cet exemple : $w' = w - \eta \Delta w$. Il y a ainsi distribution des calculs et distribution des données.

Ce système, s'il arrive bien à s'affranchir des dépendances de calculs par l'utilisation d'opérations de lecture/écriture asynchrone depuis et vers le serveur de paramètres, crée un point de souffrance à travers les requêtes adressées à l'unique serveur de paramètres qui devient le goulot d'étranglement du système. Plus il y a d'entités de calculs qui travaillent en parallèle, plus cette difficulté de distribution des calculs prend de l'ampleur.

Il existe un besoin pour obtenir une méthode efficace de détection et de localisation d'objets dans des vidéos, qui permette le passage à l'échelle pour détecter et localiser aisément de nombreuses classes d'objets sur de nombreuses vidéos.

L'invention a ainsi pour objet, selon un premier de ses aspects, un procédé d'apprentissage de descripteurs de classe pour la détection et la localisation automatique d'objets dans une vidéo, chaque objet appartenant à une classe d'objets $j$ parmi un ensemble $J$ de classes, le procédé utilisant :

- une base d'apprentissage, constituée à partir de vidéos de référence et contenant des trames annotées $(x_t, y_t)_{1 \leq t \leq T}$ comportant chacune des labels identifiant chaque objet détecté dans les trames,
- des descripteurs associés à ces labels et appris au préalable par un réseau de neurones de prétraitement à partir des trames annotées de la base d'apprentissage,
- une architecture de réseaux de neurones définis par des paramètres centralisés sur une pluralité de serveurs de paramètres, et
- une pluralité $M$ d'entités de calcul $m$ travaillant en parallèle,

procédé dans lequel, pour chaque classe d'objets j, un des réseaux de neurones de l'architecture est entraîné en utilisant comme données d'entrée les descripteurs et les labels $(\phi_{k,t}, z_{k,t}^{j})$ pour définir des descripteurs de classe $\widehat{z_{\theta_J}}$,

chaque entité de calcul $m$ utilisant, pour le calcul des descripteurs de classe $\widehat{z_{\theta_J}}$, une version des paramètres $\theta_{j,m}$ du serveur de paramètres dont l'entité dépend, et renvoyant à ce serveur de paramètres les paramètres mis à jour à la fin de son calcul, et

les serveurs de paramètres échangeant entre eux les paramètres de chaque entité de calcul pour l'entrainement des réseaux de neurones pour chaque descripteur de classe $\widehat{z_{\theta_J}}$.

L'invention permet, en utilisant les techniques de détection et localisation d'objets dans les images fixes, de disposer d'une base labélisée suffisamment importante et représentative et de descripteurs efficaces.

Le procédé selon l'invention constitue en outre un algorithme distribué et asynchrone sur plusieurs entités de calcul et de stockage travaillant en parallèle, adapté à l'apprentissage des modèles de détection et de localisation, pour une grande quantité de données. Les paramètres des réseaux de neurone sont ainsi distribués, et l'apprentissage est asynchrone, une entité de calcul n'attendant pas le résultat du calcul des autres entités pour mettre à jour ses paramètres. Le fait que chaque entité de calcul possède sa propre estimation des paramètres permet de ne pas s'appuyer sur un unique serveur de paramètres.

Le procédé selon l'invention permet un passage à l'échelle efficace, en proposant l'apprentissage d'un modèle basé sur de nombreuses vidéos avec de nombreuses classes d'objets à détecter et localiser. Les réseaux de neurones entrainés pour la mise en œuvre de l'invention sont ainsi transférables d'une vidéo à l'autre.

L'invention peut s'appliquer à la surveillance des contenus de vidéos à grande échelle, tels que disponibles dans les réseaux sociaux, et à la publicité en ligne dans les vidéos, notamment pour la vente en ligne, appelée « *e-commerce* » en anglais. Les objets à détecter dans les vidéos peuvent correspondre ou ressembler à des objets d'un catalogue de vente. Le contenu de la vidéo peut être rendu cliquable, notamment pour pouvoir cliquer sur certains objets détectés, afin de renvoyer vers le site de vente en ligne correspondant à ou aux objets sélectionnés.

Les réseaux de neurones utilisés dans l'invention sont de préférence des réseaux de neurones à convolution (« CNN » en anglais). Dans ce type de réseaux, les convolutions se font à la fois en temps et en espace, la couche de convolution étant suivie de couches pleinement connectées pour effectuer la classification.

## Base d'apprentissage

La base d'apprentissage est de préférence constituée à partir de la détection et la localisation des objets trame par trame, dans chaque vidéo de référence.

Une vidéo de référence $X$ est constituée d'un ensemble $T$ de trames $x_t$ où t est l'indice de la trame, variant entre 1 et $T$ : $X = (x_t)_{1 \leq t \leq T}$. Une pluralité $N$ de vidéos de référence $X_n$ (avec $1 \leq n \leq N$) peuvent être utilisées pour la constitution de la base d'apprentissage.

Chaque trame $x_t$ comporte des objets $y_t$. Le vecteur $y_t$ comporte avantageusement une suite de composantes $y_{i,t}$ représentant un nombre scalaire compris entre 0 et 1 et codant la présence de l'objet $obj(i)$ à la localisation $loc(i)$, avec notamment 1 désignant sa présence et 0 son absence. Les types d'objets et leurs localisations peuvent être représentés par un ensemble fini d'indices dont le cardinal est la dimension des vecteurs $y_t$, constante pour tous les vecteurs $y_t$ d'une même vidéo de référence $X_n$.

Les localisations possibles des objets dans une trame peuvent correspondre à des rectangles glissants sur la trame, de dimensions différentes, couvrant toute la trame.

La base d'apprentissage contient avantageusement les données $(x_t, y_t)_{1 \leq t \leq T}$ enregistrées pour chaque trame $x_t$ de chaque vidéo de référence $X$, trame par trame, pour un ensemble de $T$ trames. Les trames annotées de la base d'apprentissage peuvent comporter des labels désignant par leur nom les objets détectés.

La détection des objets dans les trames des vidéos de référence peut s'effectuer à l'aide d'un classifieur d'objets, par exemple le classifieur utilisant le réseau de neurones « VGG-16 » développé par l'Université d'Oxford.

L'annotation des trames pour constituer la base d'apprentissage peut se faire en utilisant des informations de bas niveau pour détecter les objets, c'est-à-dire notamment en détectant leurs bords et/ou leurs textures.

Un premier réseau de neurones peut être utilisé pour apprendre la base d'apprentissage.

Seules les premières couches du réseau de neurones peuvent être utilisées pour apprendre la base d'apprentissage, restant au niveau des pixels.

Les vidéos de référence peuvent provenir de vidéos de marques ou de sites de vente en ligne, notamment pour la publicité en ligne.

La base d'apprentissage, préalablement constituée, peut être contenue sur la ou les machines exécutant le procédé selon l'invention. Dans une variante, la base d'apprentissage est distante et accessible par le biais d'un réseau, tel que par exemple un réseau filaire, Internet, Wifi ou Bluetooth®.

Dans une variante, la base d'apprentissage est fournie par une autre méthode d'annotation, notamment par une base de trames annotées déjà existante, par exemple ImageNet ou encore Cifar-10 ou Cifar-100.

## Apprentissage des descripteurs

Le réseau de neurones de prétraitement est de préférence entraîné pour détecter des objets sur la dernière trame d'un groupe de $h$ trames annotées successives $(x_t, x_{t-1}, \ldots, x_{t-h+1})$ issues de la base d'apprentissage en utilisant les trames précédentes du groupe afin d'apprendre les descripteurs correspondants aux objets détectés.

Le réseau apprend ainsi le lien entre les descripteurs et les labels, par exemple le descripteur associé au label « maison », au label « nuage » etc. Ce réseau de neurones de prétraitement est dit supervisé car il prend en entrée $h$ trames successives $(x_t, x_{t-1}, \ldots, x_{t-h+1})$ pour prédire le vecteur d'objets $yt$.

Pour l'apprentissage des descripteurs à partir de la base d'apprentissage, deux réseaux de neurones peuvent ainsi être successivement utilisés, conduisant à deux apprentissages successifs différents, et améliorant la qualité du procédé d'apprentissage selon l'invention.

Chaque groupe de trames peut comporter entre 2 et 32 trames, par exemple 4 trames.

Le réseau de neurones peut s'exprimer comme la composition de deux fonctions $\widehat{y_\theta} \circ \Phi_w$ , où $\Phi_w(x_t, \ldots , x_{t-h+1})$ représente la partie convolutionnelle, correspondant à la fonction de calcul des descripteurs, et $\widehat{y_\theta}$ la partie pleinement connectée, w et $\theta$ représentant l'ensemble des paramètres des couches correspondantes du réseau.

## Apprentissage des descripteurs de classe

Pour chaque classe d'objets $j$ $(1 \leq j \leq J)$, un des réseaux de neurones de l'architecture est entraîné, pour définir des descripteurs de classe $\widehat{z_{\theta_J}}$ , en utilisant comme données d'entrée les descripteurs et les labels $\left(\phi_{k,t}, z_{k,t}^j\right)$ définis précédemment.

Un modèle est ainsi appris par classe d'objets, autant de modèles que de classes d'objets étant disponibles.

La base d'apprentissage permet de disposer de couples $(x_{k,t}, y_{k,t})$ où $k$ est un indice repérant la $k^{\text{ième}}$ vidéo de référence et $t$ désigne l'indice de trame. Grâce à l'apprentissage des descripteurs par le réseau de neurones de prétraitement, ces données sont avantageusement transformées en couples $\left(\phi_{k,t}, z_{k,t}^j\right)$ où $\phi_{k,t} = \Phi(x_{k,t}, x_{k,t-1}, \ldots , x_{k,t-h+1})$ et où $z_{k,t}^j$ correspond à la projection du vecteur $y_{k,t}$ sur la composante $i$ telle que $obj(i)$ correspond à la classe $j$.

Chaque entité de calcul $m$, qui utilise une version locale des paramètres $\theta_{j,m}$ reçue d'un des serveurs de paramètres, peut calculer itérativement une descente de gradient projetée :

$$\theta_{j,m}^{n+1/2} = \Pi_\Theta(\theta_{j,m}^n - \gamma^n \nabla l(\theta_{j,m}^n))$$

où $\Pi_\Theta$ désigne la projection sur $\Theta$, $\gamma^n$ désigne une suite de scalaires appelée la suite des *pas* et $l$ est la fonction de coût que l'on cherche à minimiser dans l'apprentissage, $n$ désignant la $n^{\text{ième}}$ itération.

Une fois que l'entité de calcul $m$ a effectué son calcul, elle choisit aléatoirement une autre entité de calcul $m'$ et assure une mise à jour des paramètres suivant la règle : $\theta_{j,m}^{n+1} = \theta_{j,m'}^{n+1} = (\theta_{j,m}^{n+1/2} + \theta_{j,m'}^{n+1/2})/2$ .

L'article de P. Bianchi et J. Jakubowicz, « Convergence of a Multi-Agent Projected Stochastic Gradient Algorithm for Non-Convex Optimization », IEEE Transactions on Automatic Control, 2013, prouve que la méthode selon l'invention converge bien vers l'optimum recherché dans la phase d'apprentissage.

## Architecture de réseaux de neurones

L'architecture selon l'invention comporte ainsi des réseaux de neurones apprenant des paramètres différents pour chaque classe d'objets. Les réseaux de neurones de l'architecture sont ainsi spécialisés par type d'objets.

Une partie seulement des réseaux de neurones de l'architecture peut être apprise de façon distribuée sur les différentes entités de calcul. De préférence, seule la partie haute des couches des réseaux de neurones est apprise de façon distribuée. Dans une variante, la partie basse des couches des réseaux de neurones est apprise également de façon distribuée. Les couches hautes correspondent à des couches de plus haut niveau, où le réseau est de plus en plus sensible aux détails des trames.

Les entités de calcul sont de préférence contenues sur des machines informatiques, telles que des ordinateurs ou des serveurs de calcul. Chaque machine informatique peut comporter plusieurs processeurs graphiques (« GPU » en anglais) travaillant en parallèle et constituant autant d'entités de calcul différentes.

Les machines informatiques sont avantageusement mises en réseau, par exemple par le biais d'un réseau filaire, Wifi ou Bluetooth®.

Les serveurs de paramètres peuvent être contenus dans la mémoire vive des machines informatiques. Dans une variante, les serveurs de paramètres sont déportés, et accessibles par le biais d'un réseau filaire, Wifi ou Bluetooth®.

Il peut y avoir autant de serveurs de paramètres que d'entités de calcul. Dans des variantes, il y a un ratio de un serveur de paramètres pour deux entités de calcul, ou de un serveur de paramètres pour quatre entités de calcul, voire un serveur de paramètres pour quatre entités de calcul, ou un serveur de paramètres pour huit entités de calcul, mieux encore un serveur de paramètres pour seize entités de calcul.

Chaque entité de calcul $m$ utilise de préférence une partie seulement des données d'entrée. Les données d'entrée peuvent ainsi être réparties sur différentes entités de stockage de sorte que chaque entité de calcul ne travaille que sur une partie des données. La répartition des données d'entrée entre les entités de calcul se fait avantageusement de manière aléatoire, les données d'entrées pouvant être divisées en autant de portions que d'entités de calcul et/ou de stockage, les données d'entrée suivant ainsi une loi uniforme sur le nombre d'entités.

Chaque entité de calcul peut comporter au moins une zone de mémoire.

La zone de mémoire d'une entité de calcul $m'$ est avantageusement disponible pour être interrogée par une autre entité de calcul $m$ et lui répondre, notamment dans le cadre d'une requête lecture/écriture sur le serveur de paramètres dont l'entité de calcul $m'$ dépend, même pendant que celle-ci est en train d'effectuer son propre calcul.

## Dispositif d'apprentissage de descripteurs

L'invention a encore pour objet, selon un autre de ses aspects, un dispositif pour l'apprentissage de descripteurs de classe pour la détection et la localisation automatique d'objets dans une vidéo, chaque objet appartenant à une classe d'objets $j$ parmi un ensemble $J$ de classes, le dispositif utilisant :

- une base d'apprentissage, constituée à partir de vidéos de référence et contenant des trames annotées $(x_t, y_t)_{1 \leq t \leq T}$ comportant chacune un ou plusieurs labels identifiant chaque objet détecté dans les trames, et
- des descripteurs associés à ces labels et appris au préalable par un réseau de neurones de prétraitement à partir des trames annotées de la base d'apprentissage,

le dispositif comportant une architecture de réseaux de neurones définis par des paramètres centralisés sur une pluralité de serveurs de paramètres, et une pluralité $M$ d'entités de calcul $m$ travaillant en parallèle,

le dispositif étant configuré pour entrainer, pour chaque classe d'objets $j$, un des réseaux de neurones de l'architecture en utilisant comme données d'entrée les descripteurs et les labels $\left( \phi_{k,t}, z_{k,t}^{j} \right)$ pour définir des descripteurs de classe $\widehat{z_{\theta_J}}$ ,

chaque entité de calcul m utilisant, pour le calcul des descripteurs de classe $\widehat{z_{\theta_J}}$ , une version des paramètres $\theta_{j,m}$ du serveur de paramètres dont l'entité dépend, et renvoyant à ce serveur de paramètres les paramètres mis à jour à la fin de son calcul, et les serveurs de paramètres échangeant entre eux les paramètres de chaque entité de calcul pour l'entrainement des réseaux de neurones pour chaque descripteur de classe $\widehat{z_{\theta_J}}$ .

## Détection et localisation des objets

L'invention a encore pour objet, selon un autre de ses aspects, un procédé de détection et de localisation automatique d'objets dans une vidéo, chaque objet appartenant à une classe d'objets $j$ parmi un ensemble $J$ de classes, procédé dans lequel :

- on utilise les descripteurs de classe $\widehat{z_{\theta_J}}$ appris lors du procédé d'apprentissage de descripteurs de classe tel que défini précédemment, pour apprendre une fonction $\left( \widehat{z_{\theta_J}} \circ \Phi_W \right)$ de calcul de descripteurs prenant en entrée au moins la vidéo de test, et
- on obtient des scores de détection et de localisation dans la vidéo de test pour chaque classe d'objets $j$.

Les caractéristiques énoncées ci-dessus pour le procédé d'apprentissage de descripteurs de classe s'appliquent au procédé de détection et de localisation d'objets.

## Produit programme d'ordinateur

L'invention a encore pour objet, selon un autre de ses aspects, un produit programme d'ordinateur pour la mise en œuvre du procédé d'apprentissage de descripteurs de classe pour la détection et la localisation automatique d'objets dans une vidéo tel que décrit précédemment, chaque objet appartenant à une classe d'objets $j$ parmi un ensemble $J$ de classes, le procédé utilisant :

- une base d'apprentissage, constituée à partir de vidéos de référence et contenant des trames annotées $(x_t, y_t)_{1 \leq t \leq T}$

comportant chacune des labels désignant chaque objet détecté dans les trames,
- des descripteurs associés à ces labels et appris au préalable par un réseau de neurones de prétraitement à partir des trames annotées de la base d'apprentissage,
- une architecture de réseaux de neurones définis par des paramètres centralisés sur une pluralité de serveurs de paramètres, et
- une pluralité $M$ d'entités de calcul $m$ travaillant en parallèle,

le produit programme d'ordinateur comportant un support et enregistrées sur ce support des instructions lisibles par un processeur pour lorsqu'exécutées, pour chaque classe d'objets j, un des réseaux de neurones de l'architecture est entraîné en utilisant comme données d'entrée les descripteurs et les labels $(\phi_{k,t}, z^j_{k,t})$ pour définir des descripteurs de classe $\widehat{z_{\theta_J}}$,

chaque entité de calcul $m$ utilisant, pour le calcul des descripteurs de classe $\widehat{z_{\theta_J}}$, une partie seulement des données d'entrée et une version des paramètres $\theta_{j,m}$ du serveur de paramètres dont l'entité dépend, et renvoyant à ce serveur de paramètres les paramètres mis à jour à la fin de son calcul, et

les serveurs de paramètres échangeant entre eux les paramètres de chaque entité de calcul pour l'entrainement des réseaux de neurones pour chaque descripteur de classe $\widehat{z_{\theta_J}}$.

Les caractéristiques énoncées ci-dessus pour le procédé d'apprentissage de descripteurs de classe s'appliquent au produit programme d'ordinateur.

## Description détaillée

L'invention pourra être mieux comprise à la lecture de la description détaillée qui va suivre, d'exemples non limitatifs de mise en œuvre de celle-ci, et à l'examen du dessin annexé, sur lequel :

- la figure 1, déjà décrite, représente une architecture de réseaux de neurones selon l'art antérieur,
- la figure 2 est un schéma représentant des étapes de mise en œuvre du procédé selon l'invention,
- la figure 3 illustre l'annotation de la base, trame par trame,
- la figure 3A représente un exemple de trame contenant, à différentes positions, des objets appartenant à des classes différentes,
- la figure 4 illustre l'apprentissage des descripteurs, et
- la figure 5 représente un dispositif pour l'apprentissage de descripteurs de classe comportant une architecture distribuée de réseaux de neurones selon l'invention.

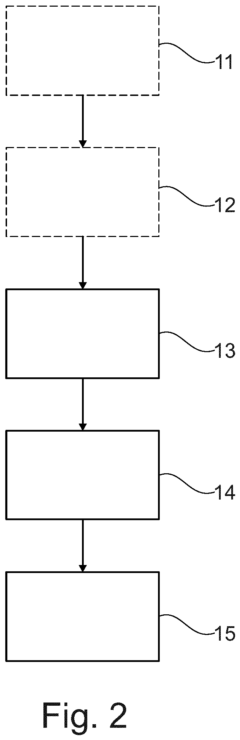

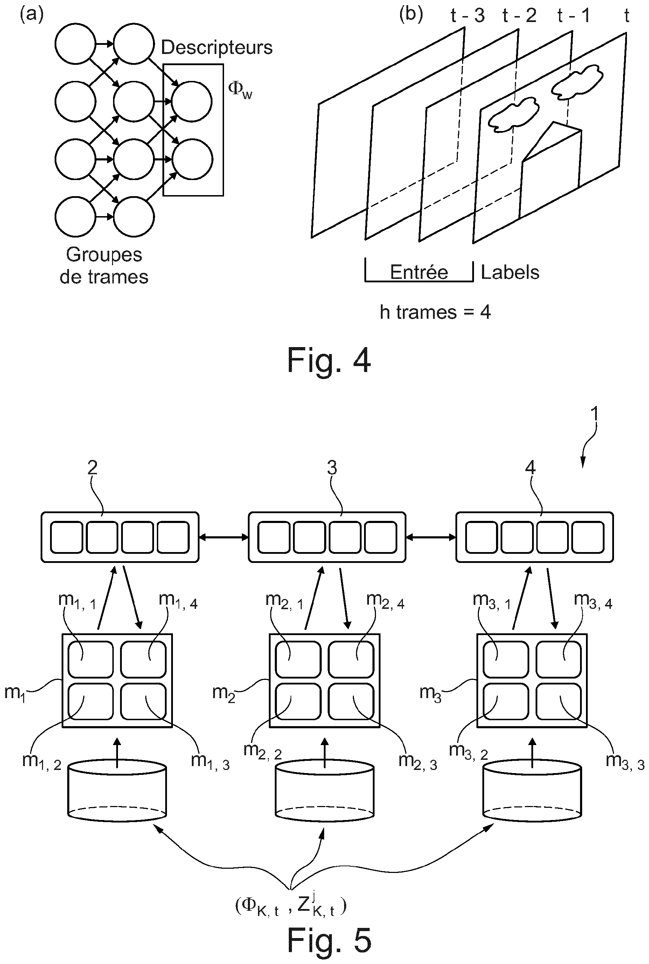

Des étapes du procédé de détection et de localisation d'objets dans une vidéo selon l'invention sont représentées à la figure 2. Chaque objet appartient à une classe d'objets j parmi un ensemble $J$ de classes. Le procédé selon l'invention utilise avantageusement un dispositif 1 pour l'apprentissage de descripteurs de classe, représenté à la figure 5 et comportant une architecture de réseaux de neurones CNN définis par des paramètres centralisés sur une pluralité de serveurs de paramètres 2, 3, 4, et une pluralité $M$ d'entités de calcul $m_{1,p}$, $m_{2,p}$, $m_{3,p}$, avec $p = 1...4$, travaillant en parallèle. Le procédé selon l'invention peut être découpé en plusieurs étapes, qui seront décrites en détails dans ce qui suit.

Lors d'une étape 11, une base d'apprentissage est constituée à partir de vidéos de référence et fournit des trames annotées $(x_t, y_t)_{1 \leq t \leq T}$. Cette base d'apprentissage est utilisée, dans une étape 12, pour faire apprendre par un réseau de neurones de prétraitement, du type CNN, des descripteurs associés aux labels contenus dans les trames annotées, comme visible à la figure 4(a). Ces étapes 11 et 12 peuvent être réalisées préalablement, les descripteurs et les labels $(\phi_{k,t}, z^j_{k,t})$ obtenus étant utilisés comme données d'entrée pour entrainer, dans une étape 13, un des réseaux de neurones de l'architecture 1 pour définir des descripteurs de classe $\widehat{z_{\theta_J}}$ pour chaque classe d'objets (j).

Lors d'une étape 14, les descripteurs de classe $\widehat{z_{\theta_J}}$ sont utilisés pour apprendre une fonction $(\widehat{z_{\theta_J}} \circ \Phi_W)$ de calcul de descripteurs prenant en entrée au moins la vidéo de test. Lors d'une étape 15, cette fonction est utilisée pour obtenir des scores de détection et de localisation dans la vidéo de test pour chaque classe d'objets j. Ces scores de détection sont de préférence des nombres scalaires compris entre 0 et 1 donnant une probabilité de la présence des objets, avec par exemple 1 désignant sa présence et 0 son absence

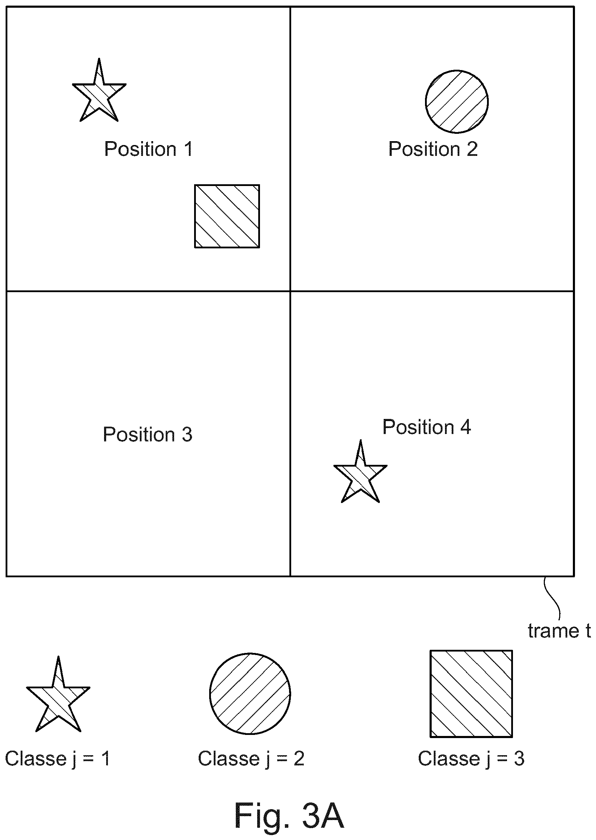

Comme représenté à la figure 3, la base d'apprentissage utilisée pour apprendre les descripteurs est de préférence entraînée à partir de vidéos de référence, et contient des trames annotées $(x_t, y_t)_{1 \le t \le T}$ comportant chacune un ou plusieurs labels identifiant chaque objet détecté dans les trames. Le vecteur $y_t$ comporte une suite de composantes $(y_{t,i})$ représentant un nombre scalaire compris entre 0 et 1 et codant la présence de l'objet *obj(i)* à la localisation *loc(i)*, avec par exemple 1 désignant sa présence et 0 son absence.

Un exemple de vecteur $y_t$, avec 4 positions dans la trame *t* et 3 classes d'objets, est représenté ci-dessous.

Les valeurs $y_{t,i}$ correspondent à un score de présence de l'objet de la classe *j* à la position correspondante. Les scores proches de 1 des composantes $y_{t,1}$, $y_{t,4}$, $y_{t,9}$, et $y_{t,6}$, correspondent à la présence de l'étoile en positions 1 et 4, du carré en position 1 et du rond en position 2, comme visible à la figure 3A. Dans cet exemple, le vecteur $z^i$ est ainsi égal à : $z^1 = y_{t,1} \dots y_{t,4}$ , $z^2 = y_{t,5} \dots y_{t,8}$ et $z^3 = y_{t,9} \dots y_{t,12}$.

$$
y_t = \begin{pmatrix}
y_{t,1} = 0.9 \\
y_{t,2} = 0.05 \\
y_{t,3} = 0.05 \\
y_{t,4} = 0.85 \\
y_{t,5} = 0.1 \\
y_{t,6} = 0.95 \\
y_{t,7} = 0.05 \\
y_{t,8} = 0.15 \\
y_{t,9} = 0.85 \\
y_{t,10} = 0.1 \\
y_{t,11} = 0.05 \\
y_{t,12} = 0.05
\end{pmatrix}
\quad
\begin{array}{ll}
pos(1) = 1 & obj(1) = 1 \\
pos(2) = 2 & obj(2) = 1 \\
pos(3) = 3 & obj(3) = 1 \\
pos(4) = 4 & obj(4) = 1 \\
pos(5) = 1 & obj(5) = 2 \\
pos(6) = 2 & obj(6) = 2 \\
pos(7) = 3 & obj(7) = 2 \\
pos(8) = 4 & obj(8) = 2 \\
pos(9) = 1 & obj(9) = 3 \\
pos(10) = 2 & obj(10) = 3 \\
pos(11) = 3 & obj(11) = 3 \\
pos(12) = 4 & obj(12) = 3
\end{array}
$$

Un premier réseau de neurones est avantageusement utilisé pour apprendre la base d'apprentissage.

Comme décrit précédemment, le réseau de neurones de prétraitement est entraîné pour détecter des objets sur la dernière trame $x_t$ d'un groupe de *h* trames successives $(x_t, x_{t-1}, \dots, x_{t-h+1})$, visibles à la figure 4(b), au nombre de 4 dans l'exemple considéré et issues de la base d'apprentissage préalablement constituée. Le réseau de neurones de prétraitement utilise pour ce faire les trames précédentes $(x_{t-1}, x_{t-2}, x_{t-3})$ du groupe afin d'apprendre les descripteurs $\Phi_W(x_t, \dots, x_{t-h+1})$ correspondants aux objets détectés, comme représenté à la figure 4(b).

Un dispositif 1 pour l'apprentissage de descripteurs de classe selon l'invention comportant une architecture distribuée de réseaux de neurones est représenté à la figure 5. Dans l'exemple considéré, le dispositif 1 comporte trois machines informatiques $m_1$, $m_2$, $m_3$, chacune de ces machines informatiques comportant quatre processeurs graphiques « GPU » $m_{1,p}$, $m_{2,p}$, $m_{3,p}$, avec $p = 1 \dots 4$, constituant chacun une entité de calcul au sens de l'invention.

Comme décrit précédemment, pour le calcul des descripteurs de classe $\widehat{z_{\theta_J}}$, chaque entité de calcul m utilise une version des paramètres $\theta_{j,m}$ du serveur de paramètres dont l'entité dépend, et renvoie à ce serveur de paramètres les paramètres mis à jour à la fin de son calcul. Les serveurs de paramètres 2, 3, 4 échangent entre eux les paramètres de chaque entité de calcul pour l'entrainement des réseaux de neurones pour chaque descripteur de classe $\widehat{z_{\theta_J}}$ .

De préférence et comme représenté, chaque machine informatique $m_1$, $m_2$, $m_3$, utilise une partie seulement des données d'entrée $\left( \phi_{k,t}, z_{k,t}^{j} \right)$.

L'invention n'est pas limitée à l'exemple qui vient d'être décrit.

Un nombre plus important de trames par groupe peut être utilisé, ce qui permet un entrainement plus rapide. Le choix du nombre de trame par groupe de trame peut dépendre du type de vidéo : par exemple s'il y a des changements fréquents de scènes, un nombre réduit de trames par groupe est choisi, ou si le mouvement général de la vidéo est lent, un plus grand nombre de trames par groupe est choisi.

Dans l'exemple de la figure 5, le dispositif selon l'invention comporte 3 serveurs de paramètres, et 3 machines informatiques, mais l'invention n'est pas limitée à un nombre particulier d'entités de calcul et de serveurs de paramètres.

## Revendications

1. Procédé d'apprentissage de descripteurs de classe pour la détection et la localisation automatique d'objets dans une vidéo, chaque objet appartenant à une classe d'objets (*j*) parmi un ensemble (*J*) de classes, le procédé utilisant :

    - une base d'apprentissage, constituée à partir de vidéos de référence et contenant des trames annotées $((x_t,y_t)_{1\leq t\leq T})$ comportant chacune un ou plusieurs labels identifiant chaque objet détecté dans les trames,
    - des descripteurs associés à ces labels et appris au préalable par un réseau de neurones de prétraitement à partir des trames annotées de la base d'apprentissage,
    - une architecture de réseaux de neurones définis par des paramètres centralisés sur une pluralité de serveurs de paramètres (2, 3, 4), et
    - une pluralité (*M*) d'entités de calcul (*m*) travaillant en parallèle,

    procédé dans lequel, pour chaque classe d'objets (*j*), un des réseaux de neurones de l'architecture est entraîné en utilisant comme données d'entrée les descripteurs et les labels $\left( \phi_{k,t}, z_{k,t}^{j} \right)$ pour définir des descripteurs de classe $\left( \widehat{z_{\theta_J}} \right)$,

    chaque entité de calcul (*m*) utilisant, pour le calcul des descripteurs de classe $\left( \widehat{z_{\theta_J}} \right)$, une version des paramètres ($\theta_{j,m}$) du serveur de paramètres dont l'entité dépend, et renvoyant à ce serveur de paramètres les paramètres mis à jour à la fin de son calcul, et

    les serveurs de paramètres échangeant entre eux les paramètres de chaque entité de calcul pour l'entrainement des réseaux de neurones pour chaque descripteur de classe $\left( \widehat{z_{\theta_J}} \right)$.

2. Procédé selon la revendication 1, dans lequel la base d'apprentissage est constituée à partir de la détection et la localisation des objets trame par trame, dans chaque vidéo de référence.

3. Procédé selon la revendication 1 ou 2, dans lequel la base d'apprentissage contient des données $((x_t,y_t)_{1\leq t\leq T})$ enregistrées pour chaque trame ($x_t$) de chaque vidéo de référence (*X*), trame par trame, pour un ensemble de (*T*) trames, ces données contenant un vecteur ($y_t$) comportant une suite de composantes ($y_{i,t}$) représentant un nombre scalaire compris entre 0 et 1 et codant la présence de l'objet (*obj*(*i*)) à la localisation (*loc*(*i*)), avec notamment 1 désignant sa présence et 0 son absence.

4. Procédé selon l'une quelconque des revendications 1 à 3, dans lequel un premier réseau de neurones est utilisé pour apprendre la base d'apprentissage.

5. Procédé selon l'une quelconque des revendications 1 à 4, dans lequel le réseau de neurones de prétraitement est entraîné pour détecter des objets sur la dernière trame d'un groupe de (*h*) trames successives ($x_t$, $x_{t-1}$, ... , $x_{t-h+1}$) issues de la base d'apprentissage en utilisant les trames précédentes du groupe afin d'apprendre les descripteurs ($\Phi_W(x_t...,x_{t-h+1})$) correspondants aux objets détectés.

6. Procédé selon la revendication précédente, dans lequel chaque groupe de trames comporte entre 2 et 32 trames, par exemple 4 trames.

7. Procédé selon l'une quelconque des revendications précédentes, dans lequel chaque entité de calcul (*m*) utilise une partie seulement des données d'entrée.

8. Procédé selon l'une quelconque des revendications précédentes, dans lequel chaque entité de calcul (*m*), qui utilise une version locale des paramètres ($\theta_{j,m}$) reçue d'un des serveurs de paramètres, calcule itérativement une descente de gradient projetée :

$$\theta_{j,m}^{n+1/2} = \Pi_{\Theta}(\theta_{j,m}^n - \gamma^n \nabla l(\theta_{j,m}^n))$$

où $\Pi_{\Theta}$ désigne la projection sur $\Theta$, $\gamma^n$ désigne une suite de scalaires appelée la suite des *pas* et *l* est la fonction de coût que l'on cherche à minimiser dans l'apprentissage.

9. Procédé selon l'une quelconque des revendications précédentes, dans lequel, une fois que l'entité de calcul (*m*) a effectué son calcul, elle choisit aléatoirement une autre entité de calcul (*m'*) et assure une mise à jour des paramètres suivant la règle : $\theta_{j,m}^{n+1} = \theta_{j,m'}^{n+1} = (\theta_{j,m}^{n+1/2} + \theta_{j,m'}^{n+1/2})/2$ .

10. Procédé selon l'une quelconque des revendications précédentes, dans lequel, chaque entité de calcul comportant au moins une zone de mémoire, la zone de mémoire d'une entité de calcul (*m'*) est disponible pour être interrogée par une autre entité de calcul (*m*) et lui répondre, notamment dans le cadre d'une requête lecture/écriture sur le serveur de paramètres dont l'entité de calcul (*m'*) dépend, même pendant que celle-ci est en train d'effectuer son propre calcul.

11. Procédé selon l'une quelconque des revendications précédentes, dans lequel une partie seulement des réseaux de neurones de l'architecture est apprise de façon distribuée sur les différentes entités de calcul.

12. Procédé selon la revendication précédente, dans lequel seule la partie haute des couches des réseaux de neurones est apprise de façon distribuée.

13. Procédé de détection et de localisation automatique d'objets dans une vidéo, chaque objet appartenant à une classe d'objets (*j*) parmi un ensemble (*J*) de classes, procédé dans lequel :

- on utilise les descripteurs de classe $\widehat{z_{\theta_J}}$ appris lors du procédé d'apprentissage de descripteurs de classe selon l'une quelconque des revendications précédentes, pour apprendre une fonction $(\widehat{z_{\theta_J}} \circ \Phi_w)$ de calcul de descripteurs prenant en entrée au moins la vidéo de test, et
- on obtient des scores de détection et de localisation dans la vidéo de test pour chaque classe d'objets (j).

14. Dispositif (1) pour l'apprentissage de descripteurs de classe pour la détection et la localisation automatique d'objets dans une vidéo, chaque objet appartenant à une classe d'objets (j) parmi un ensemble (J) de classes, le dispositif (1) utilisant :

- une base d'apprentissage, constituée à partir de vidéos de référence et contenant des trames annotées ($(x_t, y_t)_{1 \le t \le T}$) comportant chacune un ou plusieurs labels identifiant chaque objet détecté dans les trames, et
- des descripteurs associés à ces labels et appris au préalable par un réseau de neurones de prétraitement à partir des trames annotées de la base d'apprentissage,
le dispositif (1) comportant une architecture de réseaux de neurones définis par des paramètres centralisés sur une pluralité de serveurs de paramètres, et une pluralité (*M*) d'entités de calcul (*m*) travaillant en parallèle,
le dispositif étant configuré pour entrainer, pour chaque classe d'objets (*j*), un des réseaux de neurones de l'architecture en utilisant comme données d'entrée les descripteurs et les labels $(\phi_{k,t}, z_{k,t}^j)$ pour définir des descripteurs de classe $\widehat{z_{\theta_J}}$ ,

chaque entité de calcul (*m*) utilisant, pour le calcul des descripteurs de classe $\widehat{z_{\theta_J}}$ , une version des paramètres ($\theta_{j,m}$) du serveur de paramètres dont l'entité dépend, et renvoyant à ce serveur de paramètres les paramètres mis à jour à la fin de son calcul, et

les serveurs de paramètres échangeant entre eux les paramètres de chaque entité de calcul pour l'entrainement des réseaux de neurones pour chaque descripteur de classe $\overline{(z_{\theta_J})}$ .

**15.** Produit programme d'ordinateur pour la mise en œuvre du procédé d'apprentissage de descripteurs de classe pour la détection et la localisation automatique d'objets dans une vidéo tel que défini aux revendications 1 à 13, chaque objet appartenant à une classe d'objets ($j$) parmi un ensemble ($J$) de classes, le procédé utilisant :

- une base d'apprentissage, constituée à partir de vidéos de référence et contenant des trames annotées ($(x_t,y_t)_{1\leq t\leq T}$) comportant chacune un ou plusieurs labels désignant chaque objet détecté dans les trames,
- des descripteurs associés à ces labels et appris au préalable par un réseau de neurones de prétraitement à partir des trames annotées de la base d'apprentissage,
- une architecture de réseaux de neurones définis par des paramètres centralisés sur une pluralité de serveurs de paramètres, et
- une pluralité ($M$) d'entités de calcul ($m$) travaillant en parallèle,

le produit programme d'ordinateur comportant un support et enregistrées sur ce support des instructions lisibles par un processeur pour lorsqu'exécutées, pour chaque classe d'objets ($j$), un des réseaux de neurones de l'architecture est entraîné en utilisant comme données d'entrée les descripteurs et les labels $(\phi_{k,t}, z_{k,t}^{j})$ pour

définir des descripteurs de classe $\widehat{(z_{\theta_J})}$ ,

chaque entité de calcul ($m$) utilisant, pour le calcul des descripteurs de classe $(\widehat{z_{\theta_J}})$ , une partie seulement des données d'entrée et une version des paramètres ($\theta_{j,m}$) du serveur de paramètres dont l'entité dépend, et renvoyant à ce serveur de paramètres les paramètres mis à jour à la fin de son calcul, et

les serveurs de paramètres échangeant entre eux les paramètres de chaque entité de calcul pour l'entrainement des réseaux de neurones pour chaque descripteur de classe $\overline{(z_{\theta_J})}$ .

**Patentansprüche**

**1.** Verfahren zum Lernen von Klassendeskriptoren zur Erkennung und automatischen Ortung von Objekten in einem Video, wobei jedes Objekt einer Objektklasse ($j$) unter einer Menge ($J$) von Klassen angehört, wobei das Verfahren einsetzt:

- eine Lernbasis, die anhand von Referenzvideos aufgebaut ist und kommentierte Frames ($(x_t,y_t)_{1\leq t\leq T}$) enthält, von denen jeder ein oder mehrere Labels umfasst, die jedes in den Frames erkannte Objekt kennzeichnen,
- Deskriptoren, die diesen Labels zugeordnet sind und zuvor von einem neuronalen Vorverarbeitungsnetz anhand der kommentierten Frames der Lernbasis gelernt wurden,
- eine Architektur aus neuronalen Netzen, die durch Parameter definiert sind, die auf einer Mehrzahl von Parameterservern (2, 3, 4) zentralisiert sind, und
- eine Mehrzahl ($M$) von parallel arbeitenden Recheneinheiten ($m$),

wobei bei dem Verfahren für jede Objektklasse ($j$) eines der neuronalen Netze der Architektur trainiert wird, indem als Eingangsdaten die Deskriptoren und die Labels $(\phi_{k,t}, Z_{k,t}^{j})$ verwendet werden, um Klassendeskriptoren $(\widehat{Z_{\theta_J}})$ zu definieren,

wobei jede Recheneinheit ($m$) zur Berechnung der Klassendeskriptoren $(\widehat{Z_{\theta_J}})$ eine Version der Parameter ($\theta_{j,m}$) des Parameterservers, von dem die Einheit abhängt, verwendet und an diesen Parameterserver am Ende ihrer Berechnung die aktualisierten Parameter zurücksendet, und wobei die Parameterserver die Parameter jeder Recheneinheit zum Trainieren der neuronalen Netze für jeden Klassendeskriptor $(\widehat{Z_{\theta_J}})$ untereinander austauschen.

**2.** Verfahren nach Anspruch 1, bei dem die Lernbasis anhand der Erkennung und Ortung der Objekte, Frame für Frame, in jedem Referenzvideo aufgebaut wird.

**3.** Verfahren nach Anspruch 1 oder 2, bei dem die Lernbasis Daten $((x_t, y_t)_{1 \leq t \leq T})$ enthält, die für jeden Frame $(x_t)$ jedes Referenzvideos ($X$), Frame für Frame, für eine Menge von ($T$) Frames gespeichert werden, wobei diese Daten einen Vektor ($y_t$) enthalten, der eine Folge von Komponenten ($y_{i,t}$) umfasst, die eine skalare Zahl zwischen 0 und 1 repräsentieren und das Vorhandensein des Objekts (*obj(i)*) an dem Ort (*loc(i)*) codieren, wobei im Besonderen 1 sein Vorhandensein und 0 sein Nichtvorhandensein bezeichnet.

**4.** Verfahren nach einem der Ansprüche 1 bis 3, bei dem ein erstes neuronales Netz verwendet wird, um die Lernbasis zu lernen.

**5.** Verfahren nach einem der Ansprüche 1 bis 4, bei dem das neuronale Vorverarbeitungsnetz trainiert wird, um Objekte im letzten Frame einer Gruppe aus ($h$) aufeinander folgenden Frames ($x_t, x_{t-1}, \ldots, x_{t-h+1}$) zu erkennen, die aus der Lernbasis stammen, wobei die vorhergehenden Frames der Gruppe verwendet werden, um die den erkannten Objekten entsprechenden Deskriptoren ($\phi_w(x_t, x_{t-h+1})$) zu lernen.

**6.** Verfahren nach dem vorhergehenden Anspruch, wobei jede Gruppe von Frames zwischen 2 und 32 Frames umfasst, zum Beispiel 4 Frames.

**7.** Verfahren nach einem der vorhergehenden Ansprüche, bei dem jede Recheneinheit ($m$) nur einen Teil der Eingangsdaten verwendet.

**8.** Verfahren nach einem der vorhergehenden Ansprüche, bei dem jede Recheneinheit ($m$), die eine lokale Version der Parameter ($\theta_{j,m}$) verwendet, die von einem der Parameterserver empfangen wurde, iterativ einen projizierten Gradientenabstieg berechnet:

$$\theta_{j,m}^{n+1/2} = \Pi_\Theta\big(\theta_{j,m}^n - \gamma^n \nabla l\big(\theta_{j,m}^n\big)\big)$$

wobei $\Pi_\Theta$ die Projektion auf $\Theta$ bezeichnet, $\gamma^n$ eine Folge von Skalaren, Folge der *Schritte* genannt, bezeichnet und $l$ die Kostenfunktion ist, die man beim Lernen zu minimieren versucht.

**9.** Verfahren nach einem der vorhergehenden Ansprüche, bei dem die Recheneinheit ($m$), nachdem sie ihre Berechnung durchgeführt hat, zufällig eine andere Recheneinheit ($m'$) auswählt und eine Aktualisierung der Parameter gewährleistet nach der Regel:

$$\theta_{j,m}^{n+1} = \theta_{j,m'}^{n+1} = (\theta_{j,m}^{n+1/2} + \theta_{j,m'}^{n+1/2})/2.$$

**10.** Verfahren nach einem der vorhergehenden Ansprüche, bei dem, wobei jede Recheneinheit mindestens einen Speicherbereich umfasst, der Speicherbereich einer Recheneinheit ($m'$) verfügbar ist, um von einer anderen Recheneinheit ($m$) abgefragt zu werden und ihr zu antworten, insbesondere im Rahmen einer Lese/Schreib-Anforderung auf dem Parameterserver, von dem die Recheneinheit ($m'$) abhängt, sogar während diese dabei ist, ihre eigene Berechnung durchzuführen.

**11.** Verfahren nach einem der vorhergehenden Ansprüche, bei dem nur ein Teil der neuronalen Netze der Architektur auf verteilte Weise auf den verschiedenen Recheneinheiten gelernt wird.

**12.** Verfahren nach dem vorhergehenden Anspruch, bei dem nur der obere Teil der Schichten der neuronalen Netze auf verteilte Weise gelernt wird.

**13.** Verfahren zur Erkennung und automatischen Ortung von Objekten in einem Video, wobei jedes Objekt einer Objektklasse ($j$) unter einer Menge ($J$) von Klassen angehört, wobei bei dem Verfahren:

- die Klassendeskriptoren $(\widehat{Z_{\theta_J}})$ verwendet werden, die bei dem Verfahren zum Lernen von Klassendeskriptoren nach einem der vorhergehenden Ansprüche gelernt wurden, um eine Deskriptorenberechnungsfunktion

$(\widehat{Z_{\theta_l}} \circ \phi_w)$ zu lernen, die als Eingang mindestens das Testvideo nimmt, und
- Detektions- und Ortungsscores in dem Testvideo für jede Objektklasse ($j$) erhalten werden.

**14.** Vorrichtung (1) zum Lernen von Klassendeskriptoren zur Erkennung und automatischen Ortung von Objekten in einem Video, wobei jedes Objekt einer Objektklasse (j) unter einer Menge (J) von Klassen angehört, wobei die Vorrichtung (1) verwendet:

- eine Lernbasis, die anhand von Referenzvideos aufgebaut ist und kommentierte Frames ($(x_t, y_t)_{1 \leq t \leq T}$) umfasst, von denen jeder ein oder mehrere Labels umfasst, die jedes in den Frames erkannte Objekt kennzeichnen, und
- Deskriptoren, die diesen Labels zugeordnet sind und zuvor von einem neuronalen Vorverarbeitungsnetz anhand der kommentierten Frames der Lernbasis gelernt wurden, wobei die Vorrichtung (1) eine Architektur aus neuronalen Netzen, die durch Parameter definiert werden, die auf einer Mehrzahl ($M$) von Parameterservern zentralisiert sind, und eine Mehrzahl von parallel arbeitenden Recheneinheiten ($m$) umfasst,
wobei die Vorrichtung dazu ausgestaltet ist, für jede Objektklasse ($j$) eines der neuronalen Netze der Architektur zu trainieren, wobei als Eingangsdaten die Deskriptoren und die Labels $(\phi_{k,t}, Z_{k,t}^j)$ verwendet werden, um Klassendeskriptoren $(\widehat{Z_{\theta_l}})$ zu definieren,
wobei jede Recheneinheit ($m$) zur Berechnung der Klassendeskriptoren $(\widehat{Z_{\theta_l}})$ eine Version der Parameter ($\theta_{j,m}$) des Parameterservers, von dem die Einheit abhängt, verwendet und an diesen Parameterserver am Ende ihrer Berechnung die aktualisierten Parameter zurücksendet, und wobei die Parameterserver die Parameter jeder Recheneinheit zum Trainieren der neuronalen Netze für jeden Klassendeskriptor $(\widehat{Z_{\theta_l}})$ untereinander austauschen.

**15.** Computerprogrammprodukt zur Umsetzung des Verfahrens zum Lernen von Klassendeskriptoren zur Erkennung und automatischen Ortung von Objekten in einem Video wie in den Ansprüchen 1 bis 13 definiert, wobei jedes Objekt einer Objektklasse ($j$) unter einer Menge ($J$) von Klassen angehört, wobei das Verfahren einsetzt:

- eine Lernbasis, die anhand von Referenzvideos aufgebaut ist und kommentierte Frames ($(x_t, y_t)_{1 \leq t \leq T}$) enthält, von denen jeder ein oder mehrere Labels umfasst, die jedes in den Frames erkannte Objekt bezeichnen,
- Deskriptoren, die diesen Labels zugeordnet sind und zuvor von einem neuronalen Vorverarbeitungsnetz anhand der kommentierten Frames der Lernbasis gelernt wurden,
- eine Architektur aus neuronalen Netzen, die durch Parameter definiert sind, die auf einer Mehrzahl von Parameterservern zentralisiert sind, und
- eine Mehrzahl ($M$) von parallel arbeitenden Recheneinheiten ($m$), wobei das Computerprogrammprodukt einen Datenträger umfasst und auf diesem Datenträger gespeicherte Anweisungen, die von einem Prozessor gelesen werden können, damit bei ihrer Ausführung für jede Objektklasse ($j$) eines der neuronalen Netze der Architektur trainiert wird, indem als Eingangsdaten die Deskriptoren und die Labels $(\phi_{k,t}, Z_{k,t}^j)$ verwendet werden, um Klassendeskriptoren $(\widehat{Z_{\theta_l}})$ zu definieren,
wobei jede Recheneinheit ($m$) zur Berechnung der Klassendeskriptoren $(\widehat{Z_{\theta_l}})$ nur einen Teil der Eingangsdaten und eine Version der Parameter ($\theta_{j,m}$) des Parameterservers, von dem die Einheit abhängt, verwendet und an diesen Parameterserver am Ende ihrer Berechnung die aktualisierten Parameter zurücksendet, und die Parameterserver die Parameter jeder Recheneinheit zum Trainieren der neuronalen Netze für jeden Klassendeskriptor $(\widehat{Z_{\theta_l}})$ untereinander austauschen.

**Claims**

**1.** A method for learning class descriptors for the detection and the automatic location of objects in a video, each object belonging to a class of objects ($j$) from among a set ($J$) of classes, the method using:

- a learning base, composed from reference videos and containing annotated frames $((x_t, y_t)_{1 \leq t \leq T})$ each comprising one or more labels identifying each object detected in the frames,
- the descriptors associated with these labels and learned previously by a preprocessing neural network from the annotated frames of the learning base,
- an architecture of neural networks defined by parameters centralized on a plurality of parameter servers (2, 3, 4), and
- a plurality ($M$) of computation entities ($m$) working in parallel,

a method in which, for each class of objects ($j$), one of the neural networks of the architecture is trained by using as input data the descriptors and the labels $(\phi_{k,t}, z_{k,t}^j)$ to define class descriptors $(\widehat{z_{\theta_j}})$,

each computation entity ($m$) using, for the computation of the class descriptors $(\widehat{z_{\theta_j}})$, a version of the parameters ($\theta_{j,m}$) of the parameter server on which the entity depends, and returning to this parameter server the parameters updated at the end of its computation, and

the parameter servers exchanging with one another the parameters of each computation entity for the training of the neural networks for each class descriptor $\widehat{(z_{\theta_j})}$.

2. The method as claimed in claim 1, in which the learning base is composed from the detection and the location of the objects frame by frame, in each reference video.

3. The method as claimed in claim 1 or 2, wherein the learning base contains data $((x_t, y_t)_{1 \leq t \leq T})$ saved for each frame ($x_t$) of each reference video ($X$), frame by frame, for a set ($T$) of frames, these data containing a vector ($y_t$) comprising a series of components ($y_{i,t}$) representing a scalar number lying between 0 and 1 and coding the presence of the object ($obj(i)$) at the location ($loc(i)$), with, in particular, 1 designating its presence and 0 its absence.

4. The method as claimed in any one of claims 1 to 3, wherein a first neural network is used to learn the learning base.

5. The method as claimed in one of claims 1 to 4, wherein the preprocessing neural network is trained to detect objects on the last frame of a group ($h$) of successive frames ($x_t, x_{t-1}, \ldots, x_{t-h+1}$) obtained from the learning base by using the preceding frames of the group in order to learn the descriptors ($\Phi_w(x_t \ldots, x_{t-h+1})$) corresponding to the detected objects.

6. The method as claimed in the preceding claim, wherein each group of frames comprises between 2 and 32 frames, for example 4 frames.

7. The method as claimed in any one of the preceding claims, wherein each computation entity ($m$) uses only a part of the input data.

8. The method as claimed in any one of the preceding claims, wherein each computation entity ($m$), which uses a local version of the parameters ($\theta_{j,m}$) received from one of the parameter servers, iteratively computes a projected gradient descent:

$$\theta_{j,m}^{n+1/2} = \Pi_\Theta(\theta_{j,m}^n - \gamma^n \nabla l(\theta_{j,m}^n))$$

in which $\Pi_\Theta$ designates the projection on $\Theta$, $\gamma^n$ designates a series of scalars hereinafter called *steps* and $l$ is the cost function that is sought to be minimized in the learning.

9. The method as claimed in any one of the preceding claims, wherein, once the computation entity ($m$) has performed its computation, it randomly chooses another computation entity ($m'$) and ensures an updating of the parameters according to the rule: $\theta_{j,m}^{n+1} = \theta_{j,m'}^{n+1} = (\theta_{j,m}^{n+1/2} + \theta_{j,m'}^{n+1/2})/2$.

10. The method as claimed in any one of the preceding claims, wherein, each computation entity comprising at least one memory area, the memory area of a computation entity ($m'$) is available to be interrogated by another computation entity ($m$) and responds to it, notably in the context of a read/write request on the parameter server on which the computation entity (*m'*) depends, even while the latter is in the process of performing its own computation.

**11.** The method as claimed in any one of the preceding claims, wherein only a part of the neural networks of the architecture is learned in a distributed manner over the different computation entities.

**12.** The method as claimed in the preceding claim, wherein only the top part of the layers of the neural networks is learned in a distributed manner.

**13.** A method for detecting and automatically locating objects in a video, each object belonging to a class of objects (*j*) from among a set (*J*) of classes, a method in which:

- the class descriptors $\widehat{(z_{\theta_J})}$ learned in the class descriptor learning method as claimed in any one of the preceding claims are used to learn a descriptor computation function $(\widehat{z_{\theta_J}} \circ \Phi_w)$ taking as input at least the test video, and
- detection and location scores are obtained in the test video for each class of objects (*j*).

**14.** A device (1) for learning class descriptors for the detection and the automatic location of objects in a video, each object belonging to a class of objects (*j*) from among a set (*J*) of classes, the device (1) using:

- a learning base, composed from reference videos and containing annotated frames $((x_t, y_t)_{1 \leq t \leq T})$ each comprising one or more labels identifying each object detected in the frames, and
- descriptors associated with these labels and learned previously by a preprocessing neural network from the annotated frames of the learning base,
the device (1) comprising an architecture of neural networks defined by parameters centralized on a plurality of parameter servers, and a plurality (*M*) of computation entities (*m*) working in parallel,
the device being configured to train, for each class of objects (*j*), one of the neural networks of the architecture by using as input data the descriptors and the labels $(\phi_{k,t}, z_{k,t}^j)$ to define class descriptors $\widehat{(z_{\theta_J})}$,
each computation entity (*m*) using, for the computation of the class descriptors $(\widehat{z_{\theta_J}})$, a version of the parameters ($\theta_{j,m}$) of the parameter server on which the entity depends, and returning to this parameter server the parameters updated at the end of its computation, and
the parameter servers exchanging with one another the parameters of each computation entity for the training of the neural networks for each class descriptor $\widehat{(z_{\theta_J})}$.

**15.** A computer program product for implementing the method for learning class descriptors for the detection and the automatic location of objects in a video as defined in claims 1 to 12, each object belonging to a class of objects (*j*) from among a set (*J*) of classes, the method using:

- a learning base, composed from reference videos and containing annotated frames $((x_t, y_t)_{1 \leq t \leq T})$ each comprising one or more labels designating each object detected in the frames,
- descriptors associated with these labels and learned previously by a preprocessing neural network from the annotated frames of the learning base,
- an architecture of neural networks defined by parameters centralized on a plurality of parameter serves, and
- a plurality (*M*) of computation entities (*m*) working in parallel,
the computer program product comprising a medium and, stored on this medium, instructions that can be read by a processor so that, when executed, for each class of objects (*j*), one of the neural networks of the architecture is trained by using as input data the descriptors and the labels $(\phi_{k,t}, z_{k,t}^j)$ to define class descriptors $\widehat{(z_{\theta_J})}$,
each computation entity (m) using, for the computation of the class descriptors $(\widehat{z_{\theta_J}})$, only a part of the input data and a version of the parameters ($\theta_{j,m}$) of the parameter server on which the entity depends, and returning to this parameter server the parameters updated at the end of its computation, and

the parameter servers exchanging with one another the parameters of each computation entity for the training of the neural networks for each class descriptor $\overline{(z_{\theta_j})}$ .

$$w' = w - \eta \Delta w$$

101

$w$  $\Delta w$

103

102

104

106  107  108

ETAT de l'ART

Fig. 1

$X = (x_t)_{1 \leq t \leq T}$

nuage

Apprentissage

maison

$(x_t, y_t)_{1 \leq t \leq T}$

Fig. 3

Fig. 2

Fig. 3A

(a)

Descripteurs

$\Phi_W$

Groupes
de trames

(b)   t - 3   t - 2   t - 1   t

Entrée   Labels

h trames = 4

# Fig. 4

1

2          3          4

$m_{1,1}$          $m_{1,4}$          $m_{2,1}$          $m_{2,4}$          $m_{3,1}$          $m_{3,4}$

$m_1$          $m_2$          $m_3$

$m_{1,2}$          $m_{1,3}$          $m_{2,2}$          $m_{2,3}$          $m_{3,2}$          $m_{3,3}$

$(\Phi_{K,t}, Z^j_{K,t})$

# Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016081880 A
- US 8792732 B
- US 8254699 B
- US 20120238254 A
- US 7246314 B
- US 2009141969 A1

**Littérature non-brevet citée dans la description**

- **D. CIRESAN et al.** Multi-column Deep Neural Networks for Image Classification. *Computer Vision and Pattern Recognition,* 2012
- **Y. TAIGMAN et al.** DeepFace: Closing the Gap to Human-Level Performance in Face Verification. *Computer Vision and Pattern Recognition,* 2014
- **J. DENG et al.** ImageNet: A Large-Scale Hierarchical Image Database. *Computer Vision and Pattern Recognition,* 2009
- **Q. V. LE et al.** Building high-level features using large scale unsupervised learning. *International Conference on Machine Learning,* 2012
- **K. HE et al.** Deep Residual Learning for Image Recognition. *Computer Vision and Pattern Recognition,* 2016
- **S. REN et al.** Faster R-CNN: towards real-time object detection with region proposal networks. *Advances in Neural Information Processing Systems,* 2015
- **J. REDMON et al.** You only look once: Unified, real-time object detection. *Computer Vision and Pattern Recognition,* 2016
- SSD: Single shot multibox detector. **W. LIU et al.** European Conference on Computer Vision. 2016
- **DEAN et al.** Large Scale Distributed Deep Networks. *Advances in Neural Information Processing Systems,* 2012
- **P. BIANCHI ; J. JAKUBOWICZ.** Convergence of a Multi-Agent Projected Stochastic Gradient Algorithm for Non-Convex Optimization. *IEEE Transactions on Automatic Control,* 2013